# DEMANDE DE BREVET EUROPEEN

(11) **EP 1 424 832 A1**
(43) Date de publication de la demande: **02.06.2004**
(21) Numéro de dépôt: 03292746.9
(22) Date de dépôt: 03.11.2003
(51) Int. Cl.: H04L 29/06, H04L 12/56, H04L 12/26

(54) **Dispositif de mesures de bout en bout d'informations de reseau**

(30) Priorité: 28.11.2002 FR 0214936
(71) Demandeur: ALCATEL, 75008 Paris (FR)
(72) Inventeur: Martinot, Olivier, 91210 Draveil (FR); Betge-Brezetz, Stéphane, 75015 Paris (FR); Delegue, Gérard, 94230 Cachan (FR); Marilly, Emmanuel, 92160 Antony (FR)
(74) Mandataire: Chaffraix, Sylvain

(57) **Abrégé**

L'invention est relative à la mesure d'informations au sein d'un réseau de télécommunication (N). Les informations (I_{A}, I_{B}) sont mesurées au moyen de sondes (S_{A}, S_{B}) puis centralisées au niveau d'un dispositif de mesures (M). Ce dispositif de mesure détermine alors une valeur de mesure (V), en fonction de ces informations de mesures.

## Description

La présente invention concerne la mesure d'informations de réseau, notamment de paramètres de qualité de service.

Les réseaux de télécommunication peuvent offrir des services évolués de télécommunication, tels de la vidéo-conférence, de la téléphonie sur IP (*Internet Protocol*), de la vidéo à la demande etc. Ces services nécessitent le respect de différents paramètres de qualité de service de bout en bout
Notamment sur un réseau de type IP (*Internet Protocol*) - qui est dit de type « Best Effort » - le respect de ces paramètres de qualité est problématique, de sorte qu'un contrôle permanent soit nécessaire, afin de vérifier qu'à tout moment les paramètres de qualité de service nécessaires pour le service de télécommunication, soient respectés.
De même, les services mis en place sur les réseaux de télécommunication font le plus souvent, l'objet de négociations commerciales entre l'opérateur du réseau de télécommunication, le fournisseur du service, et le cas échéant, les clients de ce service. La définition des paramètres de qualité de service peut entrer dans la négociation, sous la forme de SLA (*Service Level Agreement*).

Il convient donc de mettre en place des mécanismes de mesure d'informations, afin de pouvoir vérifier que ces paramètres de qualité de service sont respectés, à tout moment, pour chaque flot de données.
On appellera dans la suite flot de données, un ensemble de paquets véhiculant des informations appartenant à une même session multimédia.

Une solution est en cours de développement au sein de l'IETF (*Internet Engineering Task Force*). Elle est par exemple exposée dans le document « draft-ietf-ipfix-architecture-02.txt », intitulé « *Architecture Model for IP Flow Information Export* ».
Le mécanisme décrit consiste à disposer des sondes, appelées « *IPFix Device* », dans le réseau, afin d'observer les paquets IP qui transitent. Les informations collectées sont ensuite envoyées à des dispositifs de mesure appelés « *Collector* », sous forme d'information agrégée par flot.

Toutefois, cette solution est muette sur le fonctionnement et l'architecture de ces dispositifs de mesure.

Le but de l'invention est de proposer un dispositif de mesures permettant d'obtenir des valeurs de mesures à partir des informations collectées par les sondes. Ces valeurs de mesures permettent par exemple de déterminer si des paramètres de qualité de service négociés sont respectés à tout moment ou non.

Plus précisément, la présente invention a pour objet un dispositif de mesure, possédant un moyen de réception d'informations de mesures collectées par un ensemble de sondes de mesures connectées à un réseau de télécommunication, relatives aux paquets de données transitant sur ledit réseau de télécommunication. Ce dispositif de mesures se caractérise en ce qu'il possède de surcroît un moyen de corrélation pour associer les informations de mesures relatives à un même paquet de données, et un moyen de calcul pour déterminer une valeur de mesure à partir de ces informations de mesures associées.

Selon un mode de réalisation, les moyens de corrélation effectuent les associations à partir d'un identificateur de paquets, contenu dans lesdites informations de mesures et d'une signature temporelle associée à la réception du paquet par chacune des sondes de mesure, elle aussi contenue dans lesdites informations de mesure.

Selon un mode de réalisation, la valeur de mesure est d'un type appartenant à la liste :
- perte de paquets,
- délai de transmission de bout en bout,
- variation du délai de transmission,
- débit ou bande passante utilisée du ou des flots de données auquel appartiennent lesdits paquets,
- le taux d'erreur de retransmission
Selon un mode de réalisation, la valeur de mesure est mémorisée dans une base de données (MIB).
Selon un mode de réalisation, le moyen de réception est prévu pour lire un numéro d'ordre contenu dans lesdites informations de mesure et pour provoquer une rémission en cas d'informations de mesure manquante.

L'invention a aussi pour objet un procédé de mesure de bout en bout, consistant à collecter des informations de mesures relatives aux paquets de données transitant sur un réseau de télécommunication, à partir d'un ensemble de sondes de mesures connectées audit réseau de télécommunication, caractérisé en ce qu'il possède de surcroît une étape de corrélation pour associer les informations de mesures relatives à un même paquet de données, et une étape de calcul pour déterminer une valeur de mesure à partir desdites informations de mesures associées.

L'invention et ses avantages apparaîtront de façon plus claire dans la description qui va suivre en liaison avec les figures annexées.
La figure 1 illustre l'architecture fonctionnelle du dispositif de mesures et le contexte dans lequel il s'inscrit.
La figure 2 schématise un paquet de données de type IPv4 (Internet *Protocol - version 4*).

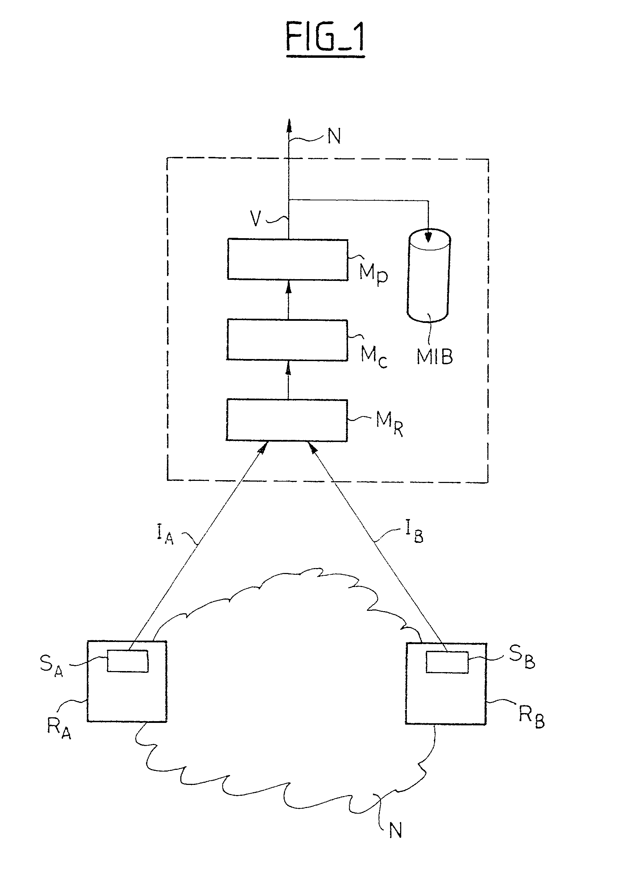

Dans l'exemple illustré par la figure 1, deux sondes de mesures S_{A} et S_{B} ont été connectées à un réseau de télécommunication N.
Ces sondes de mesures peuvent être des appareillages à part entière. Auquel cas elles doivent être physiquement connectées au réseau de télécommunication, comme tout autre élément de réseau.
Une autre possibilité est d'intégrer les sondes de mesures à des éléments de réseau R_{A}, R_{B} déjà installés. Les sondes de mesures peuvent alors par exemple être des modules logiciels qui sont téléchargés sur les éléments de réseau, ou déjà installés et configurés.
Ces sondes de mesures ont pour but de collecter des informations de mesures relatives aux paquets de données qui transitent par elle ou par les éléments de réseau sur lesquels elles sont mises en oeuvre.
Selon un mode de réalisation de l'invention, ces sondes de mesure peuvent posséder des capacités
- de filtrage afin de sélectionner des paquets correspondant à certains critères, par exemple ceux qui appartiennent à un flot ou à un ensemble de flots donné.
- D'échantillonnage, afin de ne sélectionner les paquets que selon un critère temporel (un toutes les n millisecondes) ou spatial (un paquet sur n).
Les sondes de mesures peuvent de surcroît posséder une interface pour permettre leurs configurations (paramétrage de ces critères temporel ou spatial, par exemple, ou bien paramétrage des critères de filtrage...)

Lorsqu'un paquet transite par l'élément de réseau R_{A}, puis après avoir traversé le réseau N, par l'élément de réseau R_{B}, les sondes S_{A} et S_{B} collectent des informations de réseau I_{A} et I_{B}, respectivement, relatives à ce même paquet.

Ces informations de mesure contiennent au moins un identificateur du paquet, et une signature temporelle associée à la réception du paquet par chacune des sondes de mesure.
Ainsi, la sonde S_{A} collecte un identificateur du paquet reçu et détermine une signature temporelle, par exemple la date T_{A} au moment de la réception de ce paquet. Ces données sont insérées dans les informations de mesures I_{A} qui sont transmises ensuite au dispositif de mesure M.
De la même façon, lorsque la sonde S_{B} reçoit le paquet, elle collecte un identificateur de ce paquet et détermine une signature temporelle, par exemple la date T_{B} de réception de ce paquet. Comme précédemment, ces données sont insérées dans les informations de mesure I_{B} et transmises au dispositif de mesure M.

Les dates de réception T_{A}, T_{B} peuvent être déterminées à partir des horloges internes des éléments de réseau. Dans le cas où les sondes de mesures sont elles-mêmes des appareillages à part entière, ils peuvent eux-mêmes incorporer ces horloges internes.
D'une façon connue en soi, les horloges peuvent être synchronisées les unes aux autres. La synchronisation peut être effectuée au moyen de GPS (Global Positionning System) et/ou d'un protocole de synchronisation tel que NTP (*Network Time Protocol*), par exemple décrit sur le site http://www.ntp.org

L'identificateur des paquets peut être formé de différentes façons.
Selon une mise en oeuvre de l'invention, cet identificateur contient un n-tuple issu des champs de l'entête du paquet reçu.

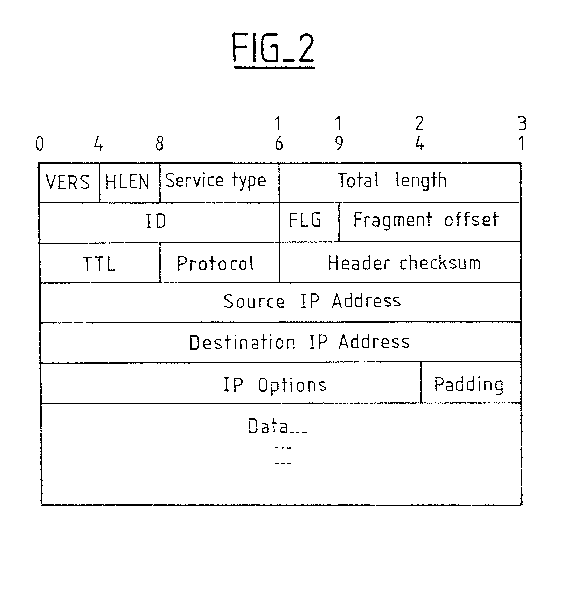

La figure 2 schématise un paquet reçu, conforme au protocole IPv4 (*Internet Protocol - version 4*). Bien entendu, il est à la portée de l'homme du métier d'adapter l'invention pour la prise en compte d'autres protocoles, notamment le protocole IPv6 (*Internet Protocol - version 6*)
Un tel paquet est composé d'un entête H et d'un corps P, contenant les données de niveau supérieur véhiculées par ce paquet. L'entête H est elle-même composée de plusieurs champs, dont l'intitulé habituel est indiqué sur la figure. La présentation en tableau de la figure 2 est également classique et conforme aux publications habituelles de l'homme du métier. Notamment, la largeur du tableau est de 32 bits et la lecture se fait de la gauche vers la droite, en commençant en haut du tableau, par le champ « VERS ».
Par exemple, la constitution d'un paquet IP est présentée dans l'ouvrage « *TCP*/*IP Tutorial and Technical Overview* », édité par la société IBM.

Selon une mise en oeuvre, identifier de façon unique un paquet revient d'une part à identifier qu'il appartient à un couple donné source/destination, et ensuite à vérifier le champ « identification ».
L'identificateur peut alors être construit à partir des champs :
- « ID » ou « Identification ».
- « Source IP address »
- « Destination IP address »

« ID » est un champ d'identification dont la valeur est déterminée par l'émetteur du paquet. Lorsqu'un paquet est fragmenté par un routeur, les paquets résultants conservent la même valeur dans le champ « ID ». Ce champ permet donc d'identifier les paquets fragmentés appartenant à un même paquet original.
Les champs « Source IP address » et « Destination IP address » représentent respectivement, les adresses des terminaux (ou hôtes) émetteur et récepteur de ce paquet, codées sur 32 bits.

D'autres champs peuvent être utilisés, en supplément ou à la place de tout ou partie des champs précédemment mentionnés.

Une autre possibilité pour construire l'identificateur est de calculer une unique valeur (checksum) à partir d'une pluralité de champs de l'entête du paquet ou même des données elles-mêmes, ou autres algorithmes de compression.

Comme dit précédemment, l'indicateur et la signature temporelle forment les informations de mesures I_{A}, I_{B} qui sont transmises par les sondes de mesures S_{A}, S_{B} au dispositif de mesures M.
Le protocole utilisé pour cette transmission peut par exemple être basé sur le protocole UDP (*User Datagram Protocol*). Selon un mode de réalisation, un protocole de sécurisation peut être utilisé, afin d'éviter l'interception de ces informations par un tiers, ou l'insertion par un tiers d'informations erronées. Dans la situation où les informations de mesures sont utilisées in fine pour établir la facturation relative à l'utilisation du réseau de télécommunication par les clients, il est en effet primordial de s'assurer de la justesse des informations de mesures. Cette assurance passe par une sécurisation du protocole de transmission.

Le dispositif de mesures M possède un moyen de réception M_{R}, dont le but est de recevoir les informations de mesures émises par les différentes sondes de mesures.
Selon un mode de réalisation de l'invention, ce moyen de réception M_{R} est en outre prévu pour lire un numéro d'ordre inséré dans les informations de mesures, par les sondes de mesure. Selon cette mise en oeuvre, les sondes de mesures S_{A}, S_{B} numérotent chacun des paquets contenant des informations de mesures qu'elles transmettent au dispositif de mesures M. Celui-ci peut alors s'assurer facilement qu'aucun paquet ne manque à la réception.
En cas de manque d'un paquet contenant des informations de mesures, il peut provoquer la ré-émission de celui-ci, par exemple en adressant à la sonde de mesures concernée, une requête en ré-émission contenant le numéro du paquet manquant. Dans cette mise en oeuvre, les sondes de mesures possèdent des moyens pour mémoriser les informations de mesures afin de pouvoir les renvoyer sur requête du dispositif de mesures M. Toutes les informations peuvent être mémorisées, ou bien seulement une partie. Dans ce dernier cas, la mémorisation fonctionne comme une mémoire tampon : les informations les plus récentes remplacent les informations les plus anciennes.

Selon une autre mise en oeuvre, le moyen de réception peut simplement ignorer le paquet perdu. Un compteur associé à la sonde de mesure S_{A}, S_{B} peut alors être incrémenté.

Au sein du dispositif de mesures M, les informations de mesures I_{A}, I_{B} sont ensuite transmises du moyen de réception M_{R} vers un moyen de corrélation M_{C}.
Le rôle de ce moyen de corrélation M_{C} est d'associer les informations de mesures relatives à un même paquet de données. Pour ce faire, le moyen de corrélation M_{C} utilise, préférentiellement, l'identificateur de paquets contenu dans les informations de mesures reçues.
En comparant les identificateurs contenus dans chaque paquet d'informations de mesures reçues, le moyen de corrélation peut déterminer que si deux identificateurs contenus dans deux paquets d'informations de mesures sont égaux, les informations de mesures sont relatives à un même paquet de données transmis sur le réseau de télécommunication.

Ainsi, dans l'exemple de la figure 1, le même paquet de données transitant de l'élément de réseau R_{A} vers l'élément de réseau R_{B}, provoque la transmission par les sondes S_{A} et S_{B}, de deux paquets informations de mesures I_{A} et I_{B}, contenant le même identificateur de paquet. Le moyen de réception M_{R}, puis le moyen de corrélation M_{C} reçoivent ces informations de mesures. Le moyen de corrélation associe alors ces deux informations de mesures I_{A} et I_{B}, puisqu'elles contiennent le même identificateur de paquets.
Bien évidemment, le nombre d'informations de mesures à associer peut être supérieur à 2, si le nombre de sondes de mesure est supérieur à deux.
Selon un mode de réalisation, le moyen de corrélation peut mettre en oeuvre une horloge, qui compte le temps écoulé à la réception d'informations de mesure non encore associées. Si au bout d'un certain délai, aucune informations de mesures n'ont pu être associé à ces premières informations de mesure, cela peut signifier que le paquet de données correspondant a été perdu à l'intérieur du réseau N. Un mécanisme peut être déclenché. Ce mécanisme peut simplement être la transmission des informations de mesures, non associées, au moyen de calcul Mₚ.
Dans la mesure où un mécanisme de contrôle de la transmission est mis en oeuvre entre les sondes de mesures et le moyen de réception, la non-réception de deuxièmes informations de mesures est l'indicateur d'une perte de paquets.

Après association (ou sans association, dans le cas d'une perte de paquet) par le moyen de corrélation M_{C}, le traitement des informations de mesures est poursuivi par le moyen de calcul Mₚ.
Le rôle du moyen de calcul Mₚ est de déterminer une (ou plusieurs) valeur de mesure V, à partir des informations de mesures I_{A}, I_{B}.
Cette valeur de mesure peut être d'un type appartenant à la liste suivante :
- perte de paquets de données,
- délai de transmission de bout en bout,
- variation du délai de transmission,
- débit ou bande passante utilisée,
- taux d'erreur en retransmission
Cette liste est donnée à titre indicatif et n'est nullement exhaustive.

La valeur V peut être calculé pour un flot de données donné, pour l'ensemble des flots de données transitant par les sondes de mesures, etc.
La détermination du flot de données auquel appartient un paquet de données peut être réalisée de diverses façons, accessibles à l'homme du métier.
Par exemple, l'information véhiculée par les identificateurs contenus dans les informations de mesures I_{A}, I_{B} peut aussi être utilisée afin de déterminer le flot d'appartenance du paquet de données.
Typiquement, les champs suivants peuvent être utilisés pour déterminer le flot :
- « Source IP address »
- « Destination IP address »
- « Protocol »

Le champ « Protocol » représente le protocole de niveau supérieur, correspondant aux données transmises par le paquet. Ce champ est codé sur 8 bits. À titre d'exemples, une valeur de 6 représente le protocole TCP (Transmission Control Protocol), une valeur de 17, le protocole UDP (User Datagram Protocol) et une valeur de 89, le protocole OSPF (Open Shortest Path First) utilisé pour le calcul des chemins de routage au sein du réseau.

D'autres paramètres peuvent être utilisés en addition ou en remplacement de tout ou partie de ces champs.
Il peut par exemple s'agir du champ DSCP. Le DSCP (Differentiated Service Code Point) est une valeur, habituellement appelée « couleur», indiquant une qualité de service différencié pour le flot de données auquel appartient le paquet. Il permet aux éléments de réseau de traiter et acheminer en priorité, les paquets ayant une valeur de DSCP plus prioritaire. La valeur du DSCP est insérée dans le champ « Service Type ».
Les spécifications relatives à cette valeur sont par exemple décrites dans le RFC 2474 de l'IETF (Internet Engineering Task Force) intitulé « *Definition of the Differentiated Services Field* (*DS Field*) *in the IPv4 and IPv6* headers », de K. Nichols, S. Blaker, F. Baker et D. Black, publié en décembre 1998.

Des informations relatives aux protocoles de plus niveau (TCP, UDP...) peuvent également être utilisées.

De même, plutôt que de s'intéresser à la détermination de la valeur de mesure V sur la base d'un flot unitaire, on peut la calculer pour un agrégat de flots, c'est-à-dire pour l'ensemble des flots ayant les mêmes adresses IP source et destination.
Auquel cas, seuls les champs « Source IP address » et « Destination IP address » peuvent être utilisés.

Par ailleurs, le calcul de cette valeur de mesure V peut être limité à un intervalle de mesure. Par exemple, le moyen de calcul Mₚ calcule la valeur de mesure V périodiquement, en fonction des informations de mesures reçues dans un intervalle de mesure correspondant à cette période. Cette mise en oeuvre permet de tracer le comportement dans le temps, de la valeur de mesure V.

Le calcul de la perte de paquets de données peut être effectué par le moyen de calcul Mₚ à partir d'informations de mesures qui n'ont pas été associés, par le moyen de corrélation M_{C}. Ainsi, à la réception d'informations de mesures non associées, on peut incrémenter un compteur donnant le nombre de paquets perdus. La valeur V peut alors être le nombre de paquets perdus.
Il peut aussi être intéressant de fournir comme valeur de mesure V, le ratio entre le nombre de paquets perdus, et le nombre total de paquets. Auquel cas, deux compteurs sont nécessaires : l'un incrémenté à chaque réception d'informations de mesures non associées, l'autre incrémenté à chaque réception d'informations de mesures, associées ou non.

Le délai de transmission peut être calculé pour chaque paquet de données transmis à travers le réseau de télécommunication N. Ce paquet de données provoque, comme précédemment expliqué, l'association de deux informations de mesures I_{A}, I_{B} par le moyen de corrélation M_{C}. Ces informations de mesures contiennent une signature temporelle, caractéristique de l'instant où le paquet de données a été reçu ou traité par la sonde de mesures. Dans la mesure où les horloges associées aux sondes de mesures S_{A}, S_{B}, le calcul du délai de transmission entre les deux sondes S_{A} et S_{B} peut être calculé comme la différence entre les valeurs des signatures temporelles. Dans cet exemple, la valeur de mesure V peut simplement être la valeur de cette différence.

Comme évoqué précédemment, les mesures peuvent être répétées dans le temps, préférentiellement de façon périodique. Il est lors possible de calculer le comportement des valeurs de mesures, et notamment de déterminer la variation du délai de transmission.

Pour ce faire, les valeurs du délai de transmission calculées par le moyen de calcul Mₚ doivent être mémorisées par le dispositif de mesure M. A partir de ces valeurs mémorisées, le moyen de calcul Mₚ peut calculer la variation de différentes façons connues en soi.
Une façon simple de faire est de calculer la variation de délai entre deux paquets consécutifs d'un même flot de paquets.

De même, les informations de mesures peuvent être utilisées afin de déterminer le débit ou la bande passante utilisée, entre deux points. Pour ce faire, les informations de mesures I_{A}, I_{B} contiennent en outre la taille du paquet.
Ainsi, en sommant les tailles des paquets, on obtient le volume total des données transmises. Il est aisé de déterminer cette valeur, pour un flot donné ou pour un agrégat de flots donné.

Si un paquet de données transitant entre deux éléments de réseau est ré-émis entre ces deux éléments de réseau, il est possible que ce paquet apparaisse au moins une fois de trop dans la liste des paquets de données sortant. Chaque paquet de données excédentaire correspond à une erreur sur le flot auquel il appartient.

Lorsque les valeurs de mesure sont calculées, elles peuvent être transmises à des applications de gestion de réseau, sous forme de notifications N. Selon une autre mise en oeuvre, elles peuvent être mémorisées dans une base de données MIB. Une telle base de données peut être une base d'information de gestion (Management Information Base, en langue anglaise), susceptible d'être interrogée par des applications de gestion de réseau selon un protocole de gestion de réseau tel SNMP (*Simple Network Management Protocol*), CMIP (*Common Management Information Protocol*)...

Le dispositif de mesures M peut être un organe central ou bien être réparti, par exemple sur un ensemble de serveurs ou de processus. Par exemple, il peut être basé sur une plate-forme logicielle de type CORBA (*Common Object Request Broker*) spécifié par l'OMG (*Open Management Group*) afin de lui permettre cette caractéristique de répartition.
Par exemple, les différents processus constitutifs du dispositif de module M peut être organisés
- sous une forme fonctionnelle : les moyens de réception M_{R}, de corrélation M_{C} et de calcul Mₚ peuvent alors chacun former un processus indépendant.
- dans un but de répartition de charge : les différents moyens peuvent être subdivisés en différents processus, chacun par exemple en charge d'un groupe de flots de paquets (selon le type de contenu, par exemple).

Selon un mode de réalisation, les dispositifs de mesures M ou une partie d'entre eux, peuvent être mis en place au sein même des éléments de réseau.

Les dispositifs de mesure peuvent de surcroît posséder une interface pour permettre leur configuration. Selon un mode de réalisation, cette configuration peut se faire en cours de fonctionnement, sans perturber le processus de mesure.

## Revendications

1. Dispositif de mesure (M), possédant un moyen de réception (M_{R}) d'informations de mesures (I_{A}, I_{B}) collectées par un ensemble de sondes de mesures (S_{A}, S_{B}) connectées à un réseau de télécommunication (N), relatives aux paquets de données transitant sur ledit réseau de télécommunication, **caractérisé en ce qu'**il possède de surcroît un moyen de corrélation (M_{C}) pour associer les informations de mesures relatives à un même paquet de données, et un moyen de calcul (Mₚ) pour déterminer une valeur de mesure (V) à partir desdites informations de mesures associées.

2. Dispositif de mesures selon la revendication précédente, dans lequel lesdits moyens de corrélation effectuent les associations à partir d'un identificateur de paquets, contenu dans lesdites informations de mesures et d'une signature temporelle associée à la réception dudit paquet par chacune desdites sondes de mesure, contenue aussi dans lesdites informations de mesure.

3. Dispositif de mesures selon la revendication 1 ou 2, dans lequel ladite valeur de mesure est d'un type appartenant à la liste :
• perte de paquets,
• délai de transmission de bout en bout,
• variation du délai de transmission,
• débit ou bande passante utilisée du ou des flots de données auquel appartiennent lesdits paquets,
• le taux d'erreur de retransmission

4. Dispositif de mesures selon l'une des revendications précédentes, dans lequel ladite valeur de mesure est mémorisée dans une base de données (MIB).

5. Dispositif de mesures selon l'une des revendications précédentes, dans lequel ledit moyen de réception est prévu pour lire un numéro d'ordre contenu dans lesdites informations de mesure et pour provoquer une rémission en cas d'informations de mesure manquante.

6. Dispositif de mesures selon l'une des revendications précédentes, possédant de surcroît au moins une interface de configuration.

7. Procédé de mesure de bout en bout, consistant à collecter des informations de mesures (I_{A}, I_{B}) relatives aux paquets de données transitant sur un réseau de télécommunication, à partir d'un ensemble de sondes de mesures (S_{A}, S_{B}) connectées audit réseau de télécommunication, **caractérisé en ce qu'**il possède de surcroît une étape de corrélation pour associer les informations de mesures relatives à un même paquet de données, et une étape de calcul (Mₚ) pour déterminer une valeur de mesure (V) à partir desdites informations de mesures associées.
